# EUROPEAN PATENT APPLICATION

(11) **EP 3 404 823 A1**
(43) Date of publication of application: **21.11.2018**
(21) Application number: 18171287.8
(22) Date of filing: 08.05.2018
(51) Int. Cl.: H02P 4/00, H02J 7/00

(54) **POWER SUPPLY APPARATUS**

(30) Priority: 15.05.2017 JP 2017096564
(71) Applicant: JTEKT CORPORATION, Osaka-shi, Osaka 542-8502 (JP)
(72) Inventor: SATO, Fumihiko, Osaka-shi,, Osaka 542-8502 (JP)
(74) Representative: Winter, Brandl, Fürniss, Hübner, Röss, Kaiser, Polte - Partnerschaft mbB

(57) **Abstract**

In a high output voltage mode, switching elements in a charging circuit are set to OFF; a first switching element is set to ON; second and third switching elements are set to OFF; one switching element in a discharging circuit is set to ON; and another switching element in the discharging circuit is set to OFF. During a main power failure, one of the switching elements in the charging circuit is set to OFF; another of the switching elements in the charging circuit is set to ON; the first switching element is set to OFF; the second and third switching elements are set to ON; the one switching element in the discharging circuit is set to ON; and the other switching element in the discharging circuit is set to OFF.

## Description

### BACKGROUND OF THE INVENTION

### 1. Field of the Invention

The invention relates to a power supply apparatus including a main power source and auxiliary power sources of a plurality of systems.

### 2. Description of Related Art

Japanese Patent Application Publication No. 2014-150672 (JP 2014-150672 A) discloses a power supply apparatus that supplies power to a drive circuit of an electric motor for an electric power steering (EPS). The power supply apparatus disclosed in JP 2014-150672 A includes a main power source, a single auxiliary power source, a charging circuit, and a switching circuit (discharging circuit). The single auxiliary power source is connected to the main power source. The charging circuit charges the auxiliary power source, based on the main power source. The switching circuit switches a normal output voltage mode in which the drive circuit is supplied with power by only the main power source and a high output voltage mode in which the drive circuit is supplied with power by both the main power source and the auxiliary power source by discharging the auxiliary power source.

When the EPS is under a high load, the switching circuit sets the power supply state to a high output voltage mode. In this case, the auxiliary power source is put into a discharging state. On the other hand, when the EPS is under a low load, the switching circuit sets the power supply state to a normal output voltage mode, and the auxiliary power source is charged.

In a typical electric power steering system, an ECU for electric power steering (EPS ECU) includes a motor drive circuit. The EPS ECU further includes a microcomputer for controlling the motor drive circuit, and a power source IC for generating power supply for the microcomputer. It is assumed that the power supply apparatus disclosed in JP 2014-150672 A is applied to an electric power steering system including the EPS ECU described above. Suppose that, in the power supply apparatus disclosed in JP 2014-150672, the minimum EPS operable voltage by the EPS ECU is about 9 [V], and the output voltage of the main power source is about 13 [V], for example. To operate the EPS using only the auxiliary power source when the main power source fails, the auxiliary power source needs to have an output voltage of about 13 [V]. Thus, in the high output voltage mode during normal control, a voltage of about 26 [V] is applied to the power source IC. Generally, an ECU designed for 12-V system voltage is used as an EPS ECU. However, in the case where a voltage of about 26 [V] is applied to the power source IC as described above, an ECU designed for 24-V system voltage needs to be used, resulting in an increase in cost.

### SUMMARY OF THE INVENTION

An object of the present invention is to provide an electric power supply apparatus that is capable of supplying power to a power supply destination using only an auxiliary power source when a main power source fails, and capable of supplying power in a high output voltage mode using a main power source and the auxiliary power source when the main power source operates normally, and that allows an output voltage in the high output voltage mode to be reduced.

A power supply apparatus according to an aspect of the present invention includes: a main power source; auxiliary power sources of a plurality of systems; a first power supply control unit that controls power supply to a power supply destination when the main power source operates normally; and a second power supply control unit that controls power supply to the power supply destination when the main power source fails; wherein the first power supply control unit has at least a high output voltage mode as an operation mode, out of a normal output voltage mode and the high output voltage mode, the normal output voltage mode being an operation mode in which the power supply destination is supplied with power by only the main power source, the high output voltage mode being an operation mode in which the auxiliary power source of at least one of the plurality of systems is connected in series between the main power source and the power supply destination such that the power supply destination is supplied with power by the main power source and the auxiliary power source of at least one of the plurality of systems; and wherein the second power supply control unit is configured to connect the auxiliary power sources of all of the plurality of systems in series between ground and the power supply destination such that the power supply destination is supplied with power by the auxiliary power sources of all of the plurality of systems.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating the general configuration of an electric power steering system according to an embodiment of the present invention;
FIG. 2 is a circuit diagram illustrating the electric configuration of the electric power steering system of FIG. 1;
FIG. 3A is a part of a flowchart for explaining the operation of a power source control ECU; and
FIG. 3B is another part of the flowchart for explaining the operation of the power source control ECU.

### DETAILED DESCRIPTION OF EMBODIMENTS

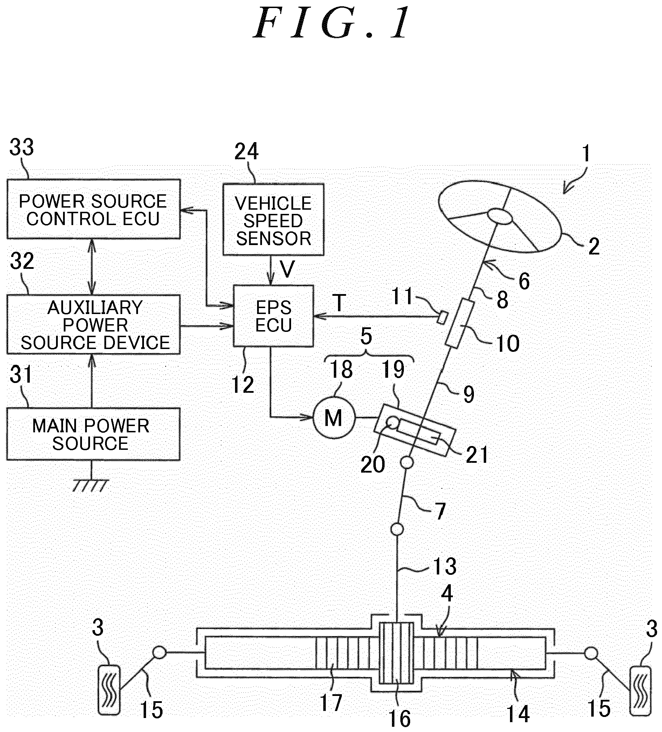

Embodiments of the present invention will be described in detail below with reference to the accompanying drawings. FIG. 1 is a schematic diagram illustrating the general configuration of an electric power steering system according to an embodiment of the present invention. An electric power steering system (EPS) 1 includes a steering wheel 2, a steering operation mechanism 4, and a steering assist mechanism 5. The steering wheel 2 is a steering member for steering the vehicle. The steering operation mechanism 4 steers steered wheels 3 in conjunction with rotation of the steering wheel 2. The steering assist mechanism 5 assists the driver in steering. The steering wheel 2 and the steering operation mechanism 4 are mechanically coupled to each other via a steering shaft 6 and an intermediate shaft 7.

The steering shaft 6 includes an input shaft 8 coupled to the steering wheel 2, and an output shaft 9 coupled to the intermediate shaft 7. The input shaft 8 and the output shaft 9 are relatively rotatably coupled to each other via a torsion bar 10. A torque sensor 11 is disposed near the torsion bar 10. The torque sensor 11 detects a steering torque T applied to the steering wheel 2, based on the amount of relative rotational displacement between the input shaft 8 and the output shaft 9. In the present embodiment, for example, the torque sensor 11 detects a torque for steering to the right as a positive steering torque T, and detects a torque for steering to the left as a negative steering torque T. The greater the absolute value of the detected steering torque T is, the greater the amount of steering torque is.

The steering operation mechanism 4 is a rack-and-pinion mechanism including a pinion shaft 13 and a rack shaft 14 that serves as a steered shaft. The steered wheels 3 are coupled to respective ends of the rack shaft 14 via tie rods 15 and knuckle arms (not illustrated). The pinion shaft 13 is coupled to the intermediate shaft 7. A pinion 16 is coupled to the distal end of the pinion shaft 13. The rack shaft 14 extends linearly in the lateral direction of the vehicle. A rack 17 that meshes with the pinion 16 is formed at an axially intermediate portion of the rack shaft 14. The pinion 16 and the rack 17 convert rotation of the pinion shaft 13 into axial movement of the rack shaft 14. Movement of the rack shaft 14 in the axial direction steers the steered wheels 3.

When the steering wheel 2 is operated (rotated), the rotation is transmitted to the pinion shaft 13 via the steering shaft 6 and the intermediate shaft 7. The pinion 16 and the rack 17 convert rotation of the pinion shaft 13 into axial movement of the rack shaft 14. Thus, the steered wheels 3 are steered. The steering assist mechanism 5 includes an electric motor 18 for assisting in steering, and a speed reduction mechanism 19 that transmits an output torque of the electric motor 18 to the steering operation mechanism 4. The speed reduction mechanism 19 is a worm gear mechanism including a worm gear 20 and a worm wheel 21 that meshes with the worm gear 20.

The worm gear 20 is rotationally driven by the electric motor 18. The worm wheel 21 is coupled to the steering shaft 6 so as to be rotatable therewith. The worm wheel 21 is rotationally driven by the worm gear 20. When the worm gear 20 is rotationally driven by the electric motor 18, the worm wheel 21 is rotationally driven, and the steering shaft 6 is rotated. The rotation of the steering shaft 6 is transmitted to the pinion shaft 13 via the intermediate shaft 7. The rotation of the pinion shaft 13 is converted into axial movement of the rack shaft 14. Thus, the steered wheels 3 are steered. That is, the electric motor 18 rotationally drives the worm gear 20, and thus can assist in steering.

The vehicle is provided with a vehicle speed sensor 24 for detecting a vehicle speed V. The steering torque T detected by the torque sensor 11, the vehicle speed V detected by the vehicle speed sensor 24, and so on are input to an EPS electric control unit (ECU) 12. The EPS ECU 12 performs so-called assist control by controlling the electric motor 18 based on these inputs.

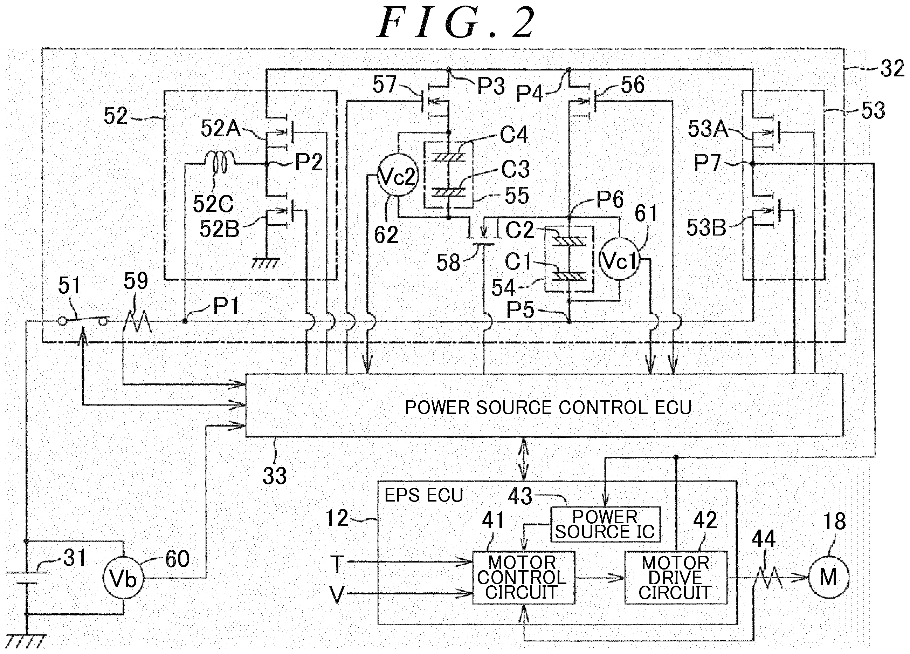

A motor drive circuit 42 and a power source IC 43 (see FIG. 2) in the EPS ECU 12 are supplied with power from one or both of a main power source 31 and an auxiliary power source device 32. The auxiliary power source device 32 is controlled by a power source control ECU 33. The EPS ECU 12 and the power source control ECU 33 are connected via a communication line. FIG. 2 is a circuit diagram illustrating the electric configuration of the electric power steering system 1.

The EPS ECU 12 includes a motor control circuit 41, a motor drive circuit (inverter circuit) 42, and the power source IC 43. The motor control circuit 41 includes a microcomputer. The motor drive circuit 42 is controlled by the motor control circuit 41, and supplies power to the electric motor 18. The power source IC 43 generates power for the motor control circuit 41. The EPS ECU 12 receives an output signal from a current sensor 44 for detecting a motor current that flows through the electric motor 18. The motor control circuit 41 will be described in detail below.

The auxiliary power source device 32 is connected in series to the main power source 31. The auxiliary power source device 32 includes a relay 51, a charging circuit 52, a discharging circuit 53, a first-system auxiliary power source 54, a second-system auxiliary power source 55, first to third switching elements 56 to 58, a current sensor 59, and first to third voltage sensors 60 to 62. The first to third switching elements 56 to 58 are n-channel MOSFETs.

The relay 51 is disposed between a positive terminal of the main power source 31 and the charging circuit 52. A connection point of the relay 51 and the charging circuit 52 is indicated by P1. The charging circuit 52 is a circuit for charging the first-system auxiliary power source 54 and the second-system auxiliary power source 55. The charging circuit 52 includes two switching elements 52A and 52B connected in series, a booster coil 52C connected between a connection point P2 of the switching elements 52A and 52B and the connection point P1. The switching elements 52A and 52B are n-channel MOSFETs.

A source of the upper-stage switching element 52A is connected to a drain of the lower-stage switching element 52B. A source of the lower-stage switching element 52B is grounded. A drain of the upper-stage switching element 52A is connected to a drain of the second switching element 57, and also connected to a drain of the first switching element 56. A connection point between the upper-stage switching element 52A and the second switching element 57 is indicated by P3. A connection point between the upper-stage switching element 52A and the first switching element 56 is indicated by P4.

The first-system auxiliary power source 54 is connected between the connection point P1 and a source of the first switching element 56. A connection point between the connection point P1 and the first-system auxiliary power source 54 is indicated by P5. The first-system auxiliary power source 54 includes a first capacitor C1 and a second capacitor C2 connected in series. A negative terminal of the first capacitor C1 is connected to the connection point P1 via the connection point P5. A positive terminal of the first capacitor C1 is connected to a negative terminal of the second capacitor C2. A positive terminal of the second capacitor C2 is connected to the source of the first switching element 56.

A source of the third switching element 58 is connected to a connection point P6 of the second capacitor C2 and the first switching element 56. The second-system auxiliary power source 55 is connected between a source of the second switching element 57 and a drain of the third switching element 58. That is, the first-system auxiliary power source 54 and the second-system auxiliary power source 55 are connected via the third switching element 58.

The second-system auxiliary power source 55 includes a third capacitor C3 and a fourth capacitor C4 connected in series. A negative terminal of the third capacitor C3 is connected to the drain of the third switching element 58. A positive terminal of the third capacitor C3 is connected to a negative terminal of the fourth capacitor C4. A positive terminal of the fourth capacitor C4 is connected to the source of the second switching element 57.

The discharging circuit 53 is connected between the connection point P5 and the drain of the first switching element 56 (connection point P4). The discharging circuit 53 includes two switching elements 53A and 53B connected in series. The switching elements 53A and 53B are n-channel MOSFETs. A source of the upper-stage switching element 53A is connected to a drain of the lower-stage switching element 53B. A drain of the upper-stage switching element 53A is connected to the connection point P4. A source of the lower-stage switching element 53B is connected to the connection point P5. A connection point P7 of the two switching elements 53A and 53B is connected to the motor drive circuit 42 and the power source IC 43 in the EPS ECU 12.

The switching state of the first to third switching elements 56 to 58 includes the following three switching states:
First switching state: All the first to third switching elements 56 to 58 are OFF.
Second switching state: The first switching element 56 is ON, and the second and third switching elements 57 and 58 are OFF.
Third switching state: The first switching element 56 is OFF, and the second and third switching elements 57 and 58 are ON.

The first switching state is set when power supply is OFF. The second switching state is set when discharging the first-system auxiliary power source 54, or when charging only the first-system auxiliary power source 54. The third switching state is set when charging both the first-system auxiliary power source 54 and the second-system auxiliary power source 55, or when the main power source 31 fails.

The current sensor 59 detects an output current (battery current Ib) of the main power source 31. The first voltage sensor 60 detects an inter-terminal voltage (battery voltage Vb) of the main power source 31. The second voltage sensor 61 detects an inter-terminal voltage of the first-system auxiliary power source 54 (first auxiliary power source voltage Vc1). The third voltage sensor 62 detects an inter-terminal voltage of the second-system auxiliary power source 55 (second auxiliary power source voltage Vc2). The detection value of the current sensor 59 and the detection values of the voltage sensors 60 to 62 are input to the power source control ECU 33. The power source control ECU 33 receives an ignition state detection signal (not illustrated) indicating the status of an ignition key.

The power source control ECU 33 controls ON and OFF of the relay 51, based on the ignition status detection signal. When the ignition key is turned ON, an ignition status detection signal indicating the ON state (hereinafter referred to as an "ignition ON state signal") is input to the power source control ECU 33. Upon receiving the ignition ON state signal, the power source control ECU 33 turns ON the relay 51. On the other hand, when the ignition key is turned OFF, an ignition status detection signal indicating the OFF state (hereinafter referred to as an "ignition OFF state signal") is input to the power source control ECU 33. Upon receiving the ignition OFF state signal, the power source control ECU 33 turns OFF the relay 51.

The power source control ECU 33 controls ON and OFF of the seven switching elements 52A, 52B, 53A, 53B, and 56 to 58 in the auxiliary power source device 32, based on the detection values of the current sensor 59, the voltage sensors 60 to 62, and the like. The power source control ECU 33 has a function of monitoring whether there is a main power source failure. A main power source failure indicates a state where the appropriate amount of voltage is not applied from the main power source 31 to the EPS ECU 12, due to a failure of the main power source 31.

If the main power source operates normally (hereinafter referred to as "during normal control"), the power source control ECU 33 controls the seven switching elements 52A, 52B, 53A, 53B, and 56 to 58, based on a main-power-source power PS. The main-power-source power PS is the actual power of the main power source 31 that the EPS ECU 12 consumes for assist control. The main-power-source power PS is obtained by, for example, computing the product of the battery current Ib detected by the current sensor 59 and the battery voltage Vb detected by the first voltage sensor 60. The main-power-source power PS is an example of a "value corresponding to power consumption of the power supply destination".

Specifically, when the main-power-source power PS is less than a predetermined output voltage switching threshold KE, the power source control ECU 33 sets the upper-stage switching element 53A to OFF and the lower-stage switching element 53B to ON in the discharging circuit 53, for example. Thus, the motor drive circuit 42 is supplied with power by only the main power source 31. A power supply state (power supply mode) in which the EPS ECU 12 is supplied with power by only the main power source 31 may be referred to as a "normal output voltage state (normal output voltage mode)".

The power source control ECU 33 sets the first to third switching elements 56 to 58 to the second switching state or the third switching state, and alternately turns ON the two switching elements 52A and 52B in the charging circuit 52, as needed. Thus, the output voltage (battery voltage) at the connection point P1 is increased, so that the increased output voltage is applied to the first-system auxiliary power source 54, or to the first-system and second-system auxiliary power sources 54 and 55. As a result, only the first-system auxiliary power source 54 or both the first-system auxiliary power source 54 and the second-system auxiliary power source 55 are charged.

When the main-power-source power PS is greater than or equal to the predetermined output voltage switching threshold KE, the power source control ECU 33 sets the two switching elements 52A and 52B in the charging circuit 52 to OFF. The power source control ECU 33 sets the switching state of the first to third switching elements 56 to 58 to the second switching state, and sets the upper-stage switching element 53A to ON and the lower-stage switching element 53B to OFF in the discharging circuit 53, for example. As a result, the motor drive circuit 42 is supplied with power by both the main power source 31 and the first-system auxiliary power source 54. A power supply state (power supply mode) in which the EPS ECU 12 is supplied with power by both the main power source 31 and the first-system auxiliary power source 54 may be referred to as a "high output voltage state (high output voltage mode)".

If there is a main power failure (hereinafter referred to as "during a power source failure"), the power source control ECU 33 controls the seven switching elements 52A, 52B, 53A, 53B, and 56 to 58 in the following manner. The power source control ECU 33 sets the upper-stage switching element 52A to OFF and the lower-stage switching element 52B to ON in the charging circuit 52. The power source control ECU 33 sets the switching state of the first to third switching elements 56 to 58 to the third switching state, and sets the upper-stage switching element 53A to ON and the lower-stage switching element 53B to OFF in the discharging circuit 53, for example. With this setting, the first-system auxiliary power source 54 and the second-system auxiliary power source 55 are connected in series between the connection point P1 and the connection point P7, and the connection point P1 is grounded via the booster coil 52C and the switching element 52B. As a result, the EPS ECU 12 is supplied with power by a series circuit of the first-system and second-system auxiliary power sources 54 and 55. Accordingly, even during a main power source failure, the EPS ECU 12 can continue assist control.

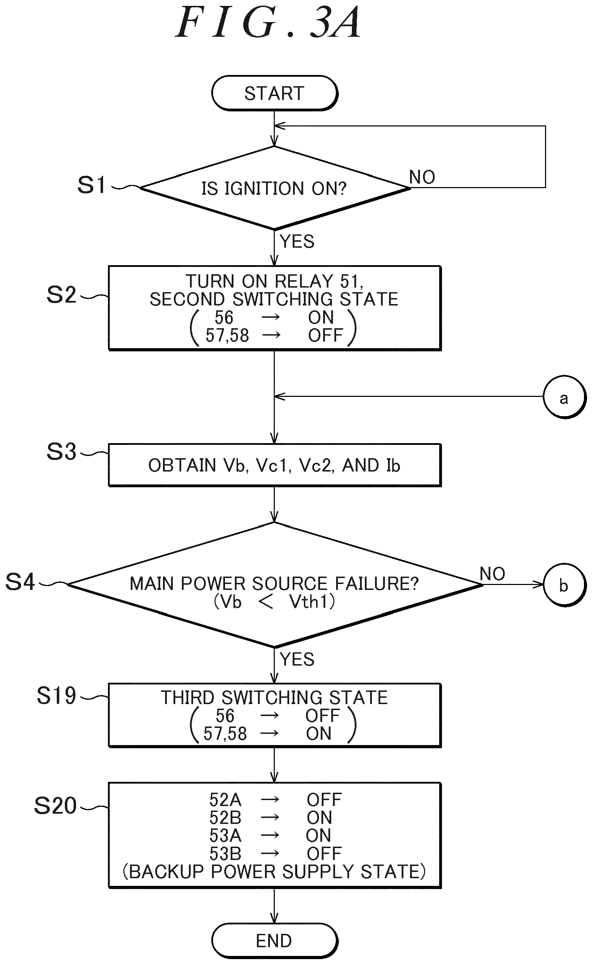

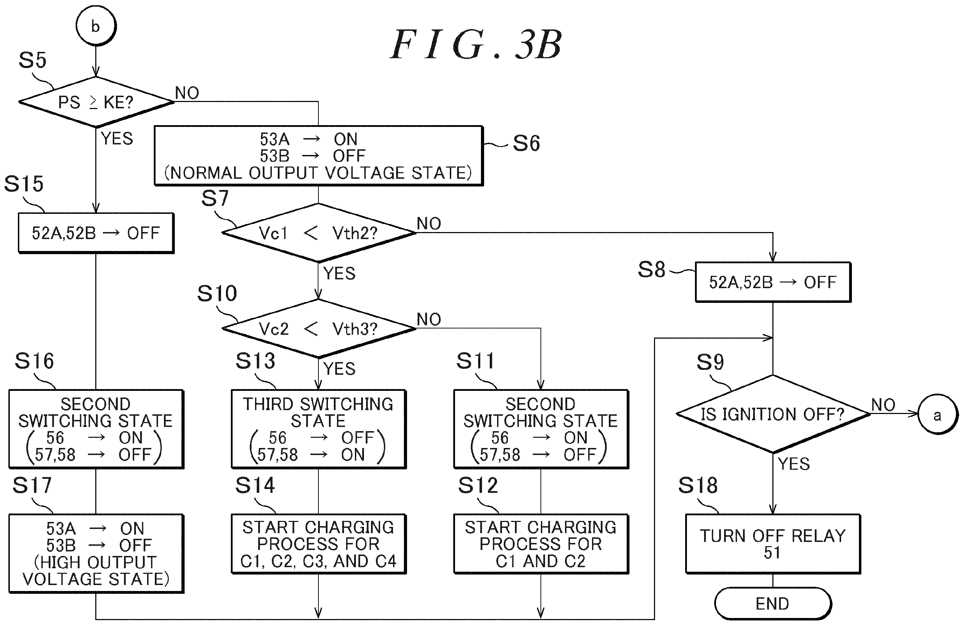

A power supply state in which the EPS ECU 12 is supplied with power from the series circuit of the first-system and second-system auxiliary power sources 54 and 55 in the manner described above may be referred to as a "backup power supply state". FIGS. 3A and 3B illustrate the flowchart for explaining the operation of the power source control ECU 33. Upon receiving the ignition ON state signal (step S1: YES), the power source control ECU 33 performs initial setting (step S2). In the initial setting, the power source control ECU 33 sets the switching state of the first to third switching elements 56 to 58 to the second switching state. That is, the first switching element 56 is turned ON, and the second and third switching elements 57 and 58 are turned OFF. In the initial setting, the power source control ECU 33 further turns ON the relay 51.

Then, the power source control ECU 33 obtains the battery voltage Vb, the first auxiliary power source voltage Vc1, and the second auxiliary power source voltage Vc2 detected by the first to third voltage sensors 60 to 62, and the battery current Ib detected by the current sensor 59 (step S3). The power source control ECU 33 determines whether the main power source 31 has failed (step S4). In the present embodiment, the power source control ECU 33 determines whether the main power source 31 has failed by determining whether the battery voltage Vb is less than a predetermined first threshold Vth1. The first threshold Vth1 is set to, for example, a value slightly greater than or equal to the minimum EPS operable voltage by the EPS ECU 12 (for example, 9 [V]). The power source control ECU 33 determines that the main power source 31 has failed if the battery voltage Vb is less than the first threshold Vth1, and determines that the main power source 31 has not failed if the battery voltage Vb is greater than or equal to the first threshold Vth1.

If the main power source 31 is determined not to have failed (step S4: NO), the power source control ECU 33 determines whether the main-power-source power PS is greater than or equal to the output voltage switching threshold KE (step S5) as illustrated in FIG. 3B. If the main-power-source power PS is less than the output voltage switching threshold KE (step S5: NO), the power source control ECU 33 sets the upper-stage switching element 53A to OFF and the lower-stage switching element 53B to ON in the discharging circuit 53 (step S6). Thus, if discharge of the first-system auxiliary power source 54 is being performed, the discharge is stopped. As a result, the power supply state (power supply mode) is switched to the normal output voltage state (normal output voltage mode).

Subsequently, the power source control ECU 33 determines whether the first auxiliary power source voltage Vc1 is less than a second threshold Vth2 (step S7). This determination is made in order to prevent overcharging of the first-system auxiliary power source 54. The second threshold Vth2 is set to a value slightly less than or equal to an upper limit voltage of the first-system auxiliary power source 54. If the first auxiliary power source voltage Vc1 is greater than or equal to the second threshold Vth2 (step S7: NO), the power source control ECU 33 sets both the two switching elements 52A and 52B in the charging circuit 52 to OFF (step S8). Then, the power source control ECU 33 determines whether the ignition OFF state signal is input (step S9). If the ignition OFF state signal is not input (step S9: NO), the procedure returns to step S3.

In step S7 described above, if the first auxiliary power source voltage Vc1 is determined to be less than the second threshold Vth2 (step S7: YES), the power source control ECU 33 determines whether the second auxiliary power source voltage Vc2 is less than a third threshold Vth3 (step S10). This determination is made in order to prevent overcharging of the second-system auxiliary power source 55. The third threshold Vth3 is set to a value slightly less than or equal to an upper limit voltage of the second-system auxiliary power source 55. If the second auxiliary power source voltage Vc2 is greater than or equal to the third threshold Vth3 (step S10: NO), the power source control ECU 33 sets the switching state of the first to third switching elements 56 to 58 to the second switching state (step S11). That is, the first switching element 56 is turned ON, and the second and third switching elements 57 and 58 are turned OFF.

Then, the power source control ECU 33 starts a charging process for the first-system auxiliary power source 54 (step S12). Specifically, the power source control ECU 33 alternately turns on the two switching elements 52A and 52B in the charging circuit 52. As a result, the capacitors C1 and C2 in the first-system auxiliary power source 54 are charged. Note that in the case where the procedure proceeds from step S11 to step S12, if the charging process has already started, the power source control ECU 33 continues the charging process.

Subsequently, the procedure proceeds to step S9, in which the power source control ECU 33 determines whether the ignition OFF state signal is input. If the ignition OFF state signal is not input (step S9: NO), the procedure returns to step S3. In step S10 described above, if the second auxiliary power source voltage Vc2 is determined to be less than the third threshold Vth3 (step S10: YES), the power source control ECU 33 sets the switching state of the first to third switching elements 56 to 58 to the third switching state (step S13). That is, the first switching element 56 is turned OFF, and the second and third switching elements 57 and 58 are turned ON.

Then, the power source control ECU 33 starts a charging process for the first-system and second-system auxiliary power sources 54 and 55 (step S14). Specifically, the power source control ECU 33 alternately turns on the two switching elements 52A and 52B in the charging circuit 52. As a result, the capacitors C1 and C2 in the first-system auxiliary power source 54 and the capacitors C3 and C4 in the second-system auxiliary power source 55 are charged. Note that in the case where the procedure proceeds from step S13 to step S14, if the charging process has already started, the power source control ECU 33 continues the charging process. The output voltage of the charging circuit 52 is set to a value high enough to fully charge the first-system and second-system auxiliary power sources 54 and 55 connected in series.

Subsequently, the procedure proceeds to step S9, in which the power source control ECU 33 determines whether the ignition OFF state signal is input. If the ignition OFF state signal is not input (step S9: NO), the procedure returns to step S3. In step S5 described above, if the main-power-source power PS is greater than or equal to the output voltage switching threshold KE (step S5: YES), the power source control ECU 33 sets both the two switching elements 52A and 52B in the charging circuit 52 to OFF (step S15). Thus, if the charging process is being executed, the charging process is stopped.

Then, the power source control ECU 33 sets the switching state of the first to third switching elements 56 to 58 to the second switching state (step S16). That is, the first switching element 56 is turned ON, and the second and third switching elements 57 and 58 are turned OFF. Then, the power source control ECU 33 sets the upper-stage switching element 53A to ON and the lower-stage switching element 53B to OFF in the discharging circuit 53 (step S17). As a result, the power supply state (power supply mode) is switched to the high output voltage state (high output voltage mode).

Subsequently, the procedure proceeds to step S9, in which the power source control ECU 33 determines whether the ignition OFF state signal is input. If the ignition OFF state signal is not input (step S9: NO), the procedure returns to step S3. In step S9, if the ignition OFF state signal is determined to be input (step S9: YES), the power source control ECU 33 turns OFF the relay 51 (step S18). Then, the procedure ends.

Referring back to FIG. 3A, in step S4 described above, if the main power source 31 is determined to have failed (step S4: YES), the power source control ECU 33 sets the switching state of the first to third switching elements 56 to 58 to the third switching state (step S19). That is, the first switching element 56 is turned OFF, and the second and third switching elements 57 and 58 are turned ON.

Then, the power source control ECU 33 sets the upper-stage switching element 52A to OFF and the lower-stage switching element 52B to ON in the charging circuit 52, and sets the upper-stage switching element 53A to ON and the lower-stage switching element 53B to OFF in the discharging circuit 53 (step S20). Thus, the power supply state is set to the backup power supply state. As a result, the EPS ECU 12 is supplied with power by the series circuit of the first-system and second-system auxiliary power sources 54 and 55. Accordingly, even when the main power source 31 fails, the EPS ECU 12 can continue assist control.

Suppose that the output voltage of the main power source 31 is, for example, 13 [V]; the maximum output voltage of each of the capacitors C1 to C4 during discharge is, for example, 3.6 [V]; and the minimum EPS operable voltage by the EPS ECU 12 is 9 [V]. In this case, in the embodiment described above, a voltage (backup voltage) of about 14.4 (= 3.6 × 4) [V] is applied to the EPS ECU 12 during a main power source failure. That is, during a main power source failure, a backup voltage greater than or equal to the minimum EPS operable voltage is applied to the EPS ECU 12.

On the other hand, in the normal output voltage state during normal control, a voltage of about 13 [V] is applied to the EPS ECU 12. In the high output voltage state during normal control, a voltage (20.2 [V]) obtained by adding a voltage (7.2 (= 3.6 × 2) [V]) less than the backup voltage to the voltage (13 [V]) of the main power source 31 is applied to the EPS ECU 12. Accordingly, during normal control, a voltage of about 13 [V] to about 20.2 [V] is applied to the EPS ECU 12. That is, in the embodiment described above, the voltage applied to the EPS ECU 12 during normal control (in the high output voltage state) can be reduced to 20.2 [V] or less. Therefore, an ECU for 12-V system voltage can be used as the EPS ECU 12.

In the case where a voltage obtained by adding the voltage of the series circuit of the first-system auxiliary power source 54 and the second-system auxiliary power source 55 (the same voltage as the backup voltage) to the voltage of the main power source 31 is applied to the EPS ECU 12 during normal control, a voltage of maximum of 27.4 [V] (13 + 3.6 × 4) is supplied to the EPS ECU 12. In this case, an EPS ECU for 12-V system voltage needs to be replaced with an EPS ECU for 24-V system voltage. According to the present embodiment, unlike the above case, it is possible to reduce the voltage applied to the EPS ECU 12 in the high output voltage state, and therefore there is no need to replace the EPS ECU 12 with that of high voltage specifications.

While an embodiment of the present invention has been described above, the present invention may be practiced in other embodiments. For example, in the above embodiment, the determination as to whether the main power source 31 has failed is made based on whether the battery voltage Vb is greater than or equal to the first threshold Vth1 (see Step S4 of FIG. 3A). However, the determination may be made based on whether an input voltage to the EPS ECU 12 is greater than or equal to a predetermined threshold.

In the above embodiment, switching between the normal output voltage state and the high output voltage state is performed based on whether the main-power-source power PS is greater than or equal to the output voltage switching threshold KE (see step S5 in FIG. 3B). However, switching between the normal output voltage state and the high output voltage state may be performed based on the power consumption of the EPS ECU 12 (power consumption of the motor drive circuit 42). The power consumption of the EPS ECU 12 is an example of a "value corresponding to power consumption of the power supply destination".

In the above embodiment, each of the auxiliary power sources of the respective systems includes a plurality of capacitors. However, each of the auxiliary power sources may include one capacitor. Each of the auxiliary power sources of the respective systems may include a power source element other than one or more capacitors. Examples of power source elements other than capacitors include all-solid battery, and lithium ion battery. In the above embodiment, the power supply apparatus according to the present embodiment is applied to an electric power steering system. However, the present invention may be applied to apparatuses that need backup of power supply, other than electric power steering systems.

Further, various modifications can be made to the present invention within the scope of the appended claims.

## Claims

1. A power supply apparatus comprising:
a main power source;
auxiliary power sources of a plurality of systems;
a first power supply control unit that controls power supply to a power supply destination when the main power source operates normally; and
a second power supply control unit that controls power supply to the power supply destination when the main power source fails;
wherein the first power supply control unit has at least a high output voltage mode as an operation mode, out of a normal output voltage mode and the high output voltage mode, the normal output voltage mode being an operation mode in which the power supply destination is supplied with power by only the main power source, the high output voltage mode being an operation mode in which the auxiliary power source of at least one of the plurality of systems is connected in series between the main power source and the power supply destination such that the power supply destination is supplied with power by the main power source and the auxiliary power source of at least one of the plurality of systems; and
wherein the second power supply control unit is configured to connect the auxiliary power sources of all of the plurality of systems in series between ground and the power supply destination such that the power supply destination is supplied with power by the auxiliary power sources of all of the plurality of systems.

2. The power supply apparatus according to claim 1, wherein the first power supply control unit has the normal output voltage mode and the high output voltage mode as the operation modes.

3. The power supply apparatus according to claim 2, wherein the first power supply control unit sets the operation mode to the normal output voltage mode when a value corresponding to power consumption of the power supply destination is less than a predetermined threshold, and sets the operation mode to the high output voltage mode when the value corresponding to power consumption of the power supply destination is greater than or equal to the predetermined threshold.

4. The power supply apparatus according to any one of claims 1 to 3, wherein each of the auxiliary power sources of the respective systems includes one or more capacitors.
